# EUROPÄISCHE PATENTANMELDUNG

(11) **EP 3 498 411 A1**
(43) Veröffentlichungstag der Anmeldung: **19.06.2019**
(21) Anmeldenummer: 17207946.9
(22) Anmeldetag: 18.12.2017
(51) Int. Cl.: B23K 9/20, B23K 9/29, B23K 9/32

(54) **BOLZENSCHWEISSPISTOLE**

(71) Anmelder: HILTI Aktiengesellschaft, 9494 Schaan (LI)
(72) Erfinder: Bertsch, Klaus, 6820 Frastanz (AT); Popp, Uwe, 9443 Widnau (CH)
(74) Vertreter: Hilti Aktiengesellschaft Corporate Intellectual Property

(57) **Zusammenfassung**

Befestigungssystem (400) zur Verschweissung eines Schweissbolzens (420) in einer Schweissrichtung (410) mit einem Untergrund (430), umfassend eine die Schweissrichtung (410) definierende Schweisspistole (440) und den Schweissbolzen (420), wobei die Schweisspistole (440) eine Haltevorrichtung (444) zum Halten des Schweissbolzens (420) während eines Schweissvorgangs umfasst und eine äussere Kontur aufweist, wobei der Schweissbolzen (420) eine Kontaktfläche (425) umfasst, welche dafür vorgesehen ist, vor und/oder während des Schweissvorgangs den Untergrund (430) zu kontaktieren, und wobei ausgehend von der Kontaktfläche (425) eine Tangente (460) an die äussere Kontur anlegbar ist, welche mit der Schweissrichtung (410) einen Winkel von weniger als 60° einschliesst, wenn der Schweissbolzen (420) von der Haltevorrichtung (444) gehalten ist und die Kontaktfläche (425) den Untergrund kontaktiert.

## Beschreibung

### Technisches Gebiet

Die Erfindung betrifft allgemein ein Befestigungssystem zur Verschweissung eines Schweissbolzens in einer Schweissrichtung mit einem Untergrund.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Dazu wird der Bolzen von einem elektrisch leitfähigen Bolzenhalter gehalten.

Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab. Während des Ansetzens des Bolzens an dem Untergrund ist der Bolzen für den Anwender nicht sichtbar.

### Darstellung der Erfindung

Aufgabe der Erfindung ist es, eine Vorrichtung und/oder ein Verfahren zur Verfügung zu stellen, mit welchem eine Befestigung eines Bolzens an einem Untergrund vereinfacht und/oder verbessert wird.

Diese Aufgabe ist gelöst bei einem Befestigungssystem zur Verschweissung eines Schweissbolzens in einer Schweissrichtung mit einem Untergrund, umfassend eine die Schweissrichtung definierende Schweisspistole und den Schweissbolzen, wobei die Schweisspistole eine Haltevorrichtung zum Halten des Schweissbolzens während eines Schweissvorgangs umfasst und eine äussere Kontur aufweist, wobei der Schweissbolzen eine Kontaktfläche umfasst, welche dafür vorgesehen ist, vor und/oder während des Schweissvorgangs den Untergrund zu kontaktieren, und wobei ausgehend von der Kontaktfläche eine Tangente an die äussere Kontur anlegbar ist, welche mit der Schweissrichtung einen Winkel von weniger als 60° bevorzugt weniger als 45°, besonders bevorzugt weniger als 30°, einschliesst, wenn der Schweissbolzen von der Haltevorrichtung gehalten ist und die Kontaktfläche den Untergrund kontaktiert. Bevorzugt weist die Schweisspistole ein Gehäuse auf, welches die äussere Kontur oder einen Teil der äusseren Kontur definiert.

Eine vorteilhafte Ausführungsform ist dadurch gekennzeichnet, dass die Schweisspistole eine die Haltevorrichtung beaufschlagende Haltefeder und ein Auflageelement mit einer Auflagefläche aufweist, und dass die Haltevorrichtung mit dem Schweissbolzen gegen eine Federkraft der Haltefeder relativ zum Auflageelement entgegen der Schweissrichtung versetzbar ist, bis die Kontaktfläche des Schweissbolzens und die Auflagefläche in Schweissrichtung auf gleicher Höhe angeordnet sind.

Eine vorteilhafte Ausführungsform ist dadurch gekennzeichnet, dass die Schweisspistole ein Anpresselement mit einer Anpressfläche und eine das Anpresselement beaufschlagende Anpressfeder aufweist, und wobei das Anpresselement gegen eine Federkraft der Anpressfeder relativ zum Auflageelement entgegen der Schweissrichtung versetzbar ist, bis die Kontaktfläche des Schweissbolzens und die Anpressfläche in Schweissrichtung auf gleicher Höhe angeordnet sind. Bevorzugt ist die Anpressfläche, in Schweissrichtung betrachtet, zwischen der Kontaktfläche und der Auflagefläche angeordnet.

Ein weiterer Aspekt der Anmeldung ist dadurch gekennzeichnet, dass das Auflageelement bezüglich der Schweissrichtung in einer Umfangsrichtung im Wesentlichen geschlossen ist und einen gekrümmten Auslasskanal aufweist. Bevorzugt ist der Auslasskanal mehrfach gekrümmt.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung,
- Fig. 2: eine Schweissanordnung in einer teilweisen Längsschnittsansicht,
- Fig. 3: eine Schweissanordnung in einer teilweisen Längsschnittsansicht,
- Fig. 4: ein Befestigungssystem, und
- Fig. 5: ein Auflageelement.

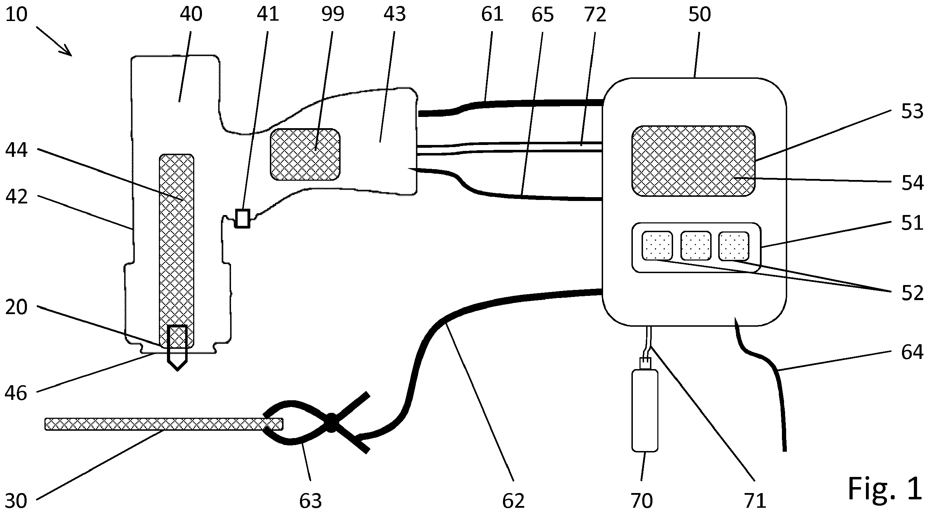

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist.

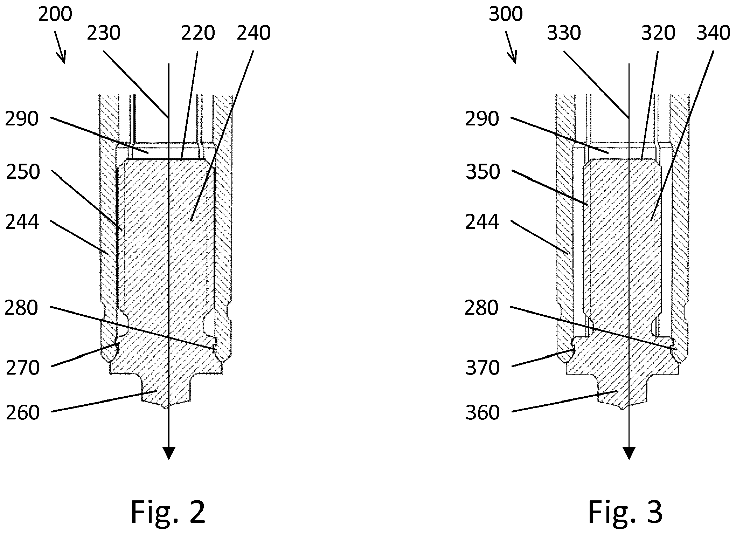

In Fig. 2 ist eine Schweissanordnung 200 mit einem Schweissbolzen 220 und einem Bolzenhalter 244 dargestellt. Der Schweissbolzen 220 weist einen eine Längsrichtung 230 definierenden Schaft 240, der mit einem als Aussengewinde ausgebildeten Anbindungsmittel 250 versehen ist, einen stirnseitigen Schweissbereich 260, der dafür vorgesehen ist, während eines Schweissvorgangs verflüssigt zu werden und ein als kreisförmig umlaufende Vertiefung, vorzugsweise Rille, ausgebildeten Haltemittel 270, welches in der Längsrichtung 230 zwischen dem Schweissbereich 260 und dem Anbindungsmittel 250 angeordnet ist. Der Bolzenhalter 244 weist eine als kreisförmig umlaufender Vorsprung ausgebildete Haltevorrichtung 280 auf, mit welcher das Haltemittel 270 im Eingriff ist, um den Schweissbolzen 220 während eines Schweissvorgangs, beispielsweise mit der Schweissvorrichtung 10 (Fig. 1), zu halten.

Der Bolzenhalter 244 ist Teil einer nicht näher gezeigten Schweisspistole zur Verschweissung des Schweissbolzens 220 mit einem Untergrund, welche beispielsweise wie die Schweisspistole 40 (Fig. 1) ausgebildet ist. Die Haltevorrichtung 280 ist an einem vorderen Ende der Schweisspistole angeordnet, so dass der Schweissbolzen 220 nach vorne auf den Untergrund zu bewegt wird, wenn der Bolzenhalter 244 beispielsweise von einer Bolzeneintaucheinrichtung nach vorne bewegt wird. Die Schweisspistole, insbesondere der Bolzenhalter 244, weist hinter der Haltevorrichtung 280 eine im Wesentlichen als Hohlraum ausgebildete Aufnahme 290 für das Anbindungsmittel 250 des Schweissbolzens auf.

Durch diese Anordnung wird einerseits das Anbindungsmittel 250 vor einer Beschädigung durch die Haltevorrichtung 280 geschützt und andererseits sichergestellt, dass die Haltevorrichtung 280 den Schweissbolzen unabhängig vor einer Länge seines Schaftes 240 und/oder des Anbindungsmittels 250 in der gewünschten Position hält. Darüber hinaus ist es möglich, einen einzigen Bolzenhalter für Schweissbolzen mit unterschiedlichen, insbesondere unterschiedlich grossen, Anbindungsmitteln zu verwenden.

In Fig. 3 ist eine zweite Schweissanordnung 300 mit einem zweiten Schweissbolzen 320 und dem Bolzenhalter 244 aus Fig. 2 dargestellt. Der zweite Schweissbolzen 320 weist ebenfalls einen eine Längsrichtung 330 definierenden Schaft 340, der mit einem als Aussengewinde ausgebildeten Anbindungsmittel 350 versehen ist, einen stirnseitigen Schweissbereich 360, der dafür vorgesehen ist, während eines Schweissvorgangs verflüssigt zu werden und ein als kreisförmig umlaufende Vertiefung ausgebildetes zweites Haltemittel 370 auf, welches in der Längsrichtung 330 zwischen dem Schweissbereich 360 und dem Anbindungsmittel 350 angeordnet ist und die gleiche Form sowie die gleichen Abmessungen hat wie das Haltemittel 270 des in Fig. 2 gezeigten Schweissbolzens 220.

Das Anbindungsmittel 350 des Schweissbolzens 320 hat einen kleineren Durchmesser als das Anbindungsmittel 250 des Schweissbolzens 220 und wird daher ebenfalls in der Aufnahme 290 aufgenommen, wenn der Schweissbolzen 350 von der mit dem Haltemittel 370 in Eingriff befindlichen Haltevorrichtung 280 gehalten ist. Der Schweissbolzen 220 und der zweite Schweissbolzen 320 sind somit Teil eines Befestigungssystems gemäss dieser Anmeldung. Der Schweissbereich 260 des Schweissbolzens 220 ist dabei in Form und Abmessungen gleich wie der Schweissbereich 360 des zweiten Schweissbolzens 320. Dadurch ist es möglich, Schweissbolzen mit unterschiedlichen, insbesondere unterschiedlich grossen Anbindungsmitteln mit denselben Schweissparametern wie Schweissstromstärke, elektrische Spannung, Schweissstromdauer und dergleichen, an den Untergrund zu schweissen.

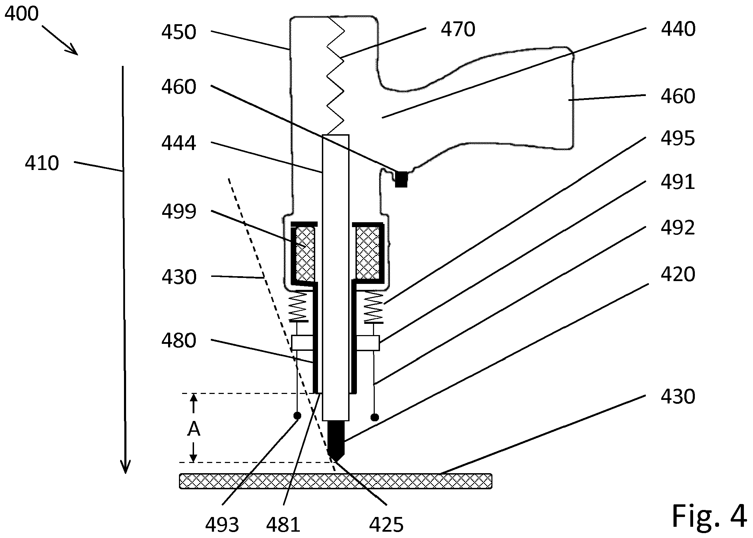

In Fig. 4 ist ein Befestigungssystem 400 dargestellt, welches zur Verschweissung eines Schweissbolzens 420 in einer Schweissrichtung 410 mit einem Untergrund 430 vorgesehen ist. Das Befestigungssystem 400 umfasst neben dem Schweissbolzen 420 eine die Schweissrichtung 430 definierende Schweisspistole 440 mit einem Gehäuse 450 und einem Griff 460. Die Schweisspistole weist eine als Bolzenhalter ausgebildete Haltevorrichtung 444 auf, welche zum Halten des Schweissbolzens 420 während eines Schweissvorgangs eine nicht näher gezeigte Bolzenaufnahme umfasst, in welche der Schweissbolzen 420 einsteckbar und vorzugsweise klemmend gehalten wird. Eine Kontaktfläche 425 des Schweissbolzens 420 kontaktiert vor und/oder während des Schweissvorgangs den Untergrund 430. Ausgehend von der Kontaktfläche 425 ist eine Tangente 460 an eine äussere Kontur der Schweisspistole 440 anlegbar, welche mit der Schweissrichtung 410 einen Winkel von 20° einschliesst. Für einen Anwender des Befestigungssystems 400 ist dadurch die Kontaktstelle des Schweissbolzens 420 mit dem Untergrund 430 gut einsehbar, zumindest bis die Kontaktfläche 425 den Untergrund 430 kontaktiert.

Die Schweisspistole 440 weist eine die Haltevorrichtung 444 in die Schweissrichtung 410 beaufschlagende Haltefeder 470 und ein Auflageelement 480 mit einer in die Schweissrichtung 410 weisende Auflagefläche 481 auf. Die Haltevorrichtung 444 mit dem Schweissbolzen 420 ist gegen eine Federkraft der Haltefeder 470 relativ zum Auflageelement 480 entgegen der Schweissrichtung 410 um einen Anpressweg A versetzbar, bis die Kontaktfläche 425 des Schweissbolzens 420 und die Auflagefläche 481 in der Schweissrichtung 410 auf gleicher Höhe angeordnet sind. Der Anpressweg A ist die Strecke, um welche die Schweisspistole 440 ab dem Kontaktieren des Untergrunds 430 durch die Kontaktfläche 425 noch in der Schweissrichtung 410 zu bewegen ist, bevor ein Schweissvorgang beginnt.

Die Schweisspistole weist ein Anpresselement 490 auf, welches einen das Auflageelement 480 umgebenden Führungsring 491 und zwei, drei oder mehr Anpressarme 492 mit jeweils einer Anpressfläche 493 aufweist. Die Anpressarme 492 sind starr mit dem Führungsring 491 verbunden, welcher in der Schweissrichtung 410 versetzbar und dabei von dem Auflageelement 480 geführt ist. Die Schweisspistole weist weiterhin zumindest eine, im vorliegenden Beispiel zwei Anpressfedern 495 auf, welche das Anpresselement 490, im vorliegenden Beispiel den Führungsring 491, in der Schweissrichtung 410 mit einer Federkraft beaufschlagen.

Das Anpresselement 490 ist gegen die Federkraft der Anpressfedern 495 relativ zum Auflageelement 480 entgegen der Schweissrichtung 410 versetzbar, bis die Kontaktfläche 425 des Schweissbolzens 420 und die Anpressflächen 493 in der Schweissrichtung 410 auf gleicher Höhe angeordnet sind. Die Anpressflächen 493 sind, in Schweissrichtung 410 betrachtet, zwischen der Kontaktfläche 425 und der Auflagefläche 481 angeordnet. Dadurch ist sichergestellt, dass während eines Ansetzens des Befestigungssystems 400 an den Untergrund 430 zunächst die Kontaktfläche 425 des Schweissbolzens 420, danach die Anpressflächen 493 des Anpresselements 490 und schliesslich die Auflagefläche 481 des Auflageelements 480 den Untergrund 430 kontaktieren. Sobald das Auflageelement 480 auf dem Untergrund 430 aufliegt, kann ein Anwender mittels eines Auslöseelements 498 einen Schweissvorgang auslösen.

Durch die Sichtbarkeit des Schweissbolzens 420 wird es einem Anwender erleichtert, die Kontaktfläche 425 an der gewünschten Schweissstelle auf dem Untergrund 430 anzusetzen oder die Position der Kontaktfläche 425 mittels der Schweisspistole 440, insbesondere deren Griffes 460 zu korrigieren. Da der Anwender zwischen den Anpressarmen 492 hindurchsehen kann, ist die für den Blickwinkel massgebliche Tangente, ausgehend von der Kontaktfläche 425 an das Auflageelement 480 oder, wie im vorliegenden Beispiel, an den Führungsring 491 anlegbar. Sobald die Anpressflächen 493 auf dem Untergrund 430 aufliegen, ist die Schweisspistole 440 in der gewünschten Position insbesondere gegen ein Verrutschen abgestützt. Zu diesem Zweck bestehen die Anpressflächen 493 vorzugsweise aus einem Elastomer.

Die Anpressfedern 495 dienen einer Rückstellung des Anpresselements 490 nach einem Abheben der Schweisspistole 440 von dem Untergrund 430, beispielsweise nach einem Schweissvorgang. Die Haltefeder 470 dient einer Rückstellung der Haltevorrichtung 444 nach einem Abheben der Schweisspistole 440 von dem Untergrund und/oder während des Schweissvorgangs als Eintaucheinrichtung, welche den zuvor von einer als Hubmagnet ausgebildeten Abhubeinrichtung 499 vom Untergrund wegbewegten Schweissbolzen in ein geschmolzenes Schweissbad eintauchen lässt.

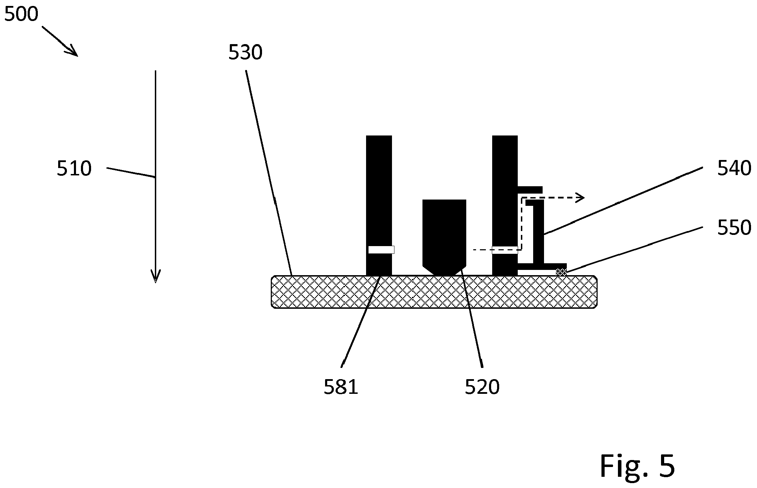

In Fig. 5 ist ein Auflageelement 500 mit einer Auflagefläche 581 zur Auflage auf einem Untergrund 530 dargestellt. Das Auflageelement 500 ist Teil einer nicht weiter gezeigten Schweisspistole für eine Verschweissung eines Schweissbolzens 520 in einer Schweissrichtung 510 mit dem Untergrund 530. Das Auflageelement 500 ist bezüglich der Schweissrichtung 510 in einer Umfangsrichtung im Wesentlichen geschlossen ist und weist einen Auslasskanal 540 beispielsweise für ein den Schweissbolzen 520 umströmendes Schutzgas auf. Fig. 5 zeigt, dass der Auslasskanal 540 zweifach gekrümmt ist, so dass eine Gefahr austretender Wärmestrahlung oder austretenden heissen Materials reduziert, insbesondere vermieden ist. Der Auslasskanal 540 weist einen Stützfuss 550 für eine Abstützung auf dem Untergrund 530 auf, welcher beispielsweise ein Elastomer umfasst oder aus einem Elastomer besteht.

Die Erfindung wurde anhand von Beispielen eines Systems zur Befestigung eines ersten Gegenstandes an einem zweiten Gegenstand sowie einer Schweisspistole beschrieben. Die Merkmale der beschriebenen Ausführungsformen sind dabei auch beliebig miteinander innerhalb einer einzigen Befestigungsvorrichtung kombinierbar. Es wird darauf hingewiesen, dass die erfindungsgemässe Vorrichtung auch für andere Zwecke geeignet ist.

## Patentansprüche

1. Befestigungssystem zur Verschweissung eines Schweissbolzens in einer Schweissrichtung mit einem Untergrund, umfassend eine die Schweissrichtung definierende Schweisspistole und den Schweissbolzen, wobei die Schweisspistole eine Haltevorrichtung zum Halten des Schweissbolzens während eines Schweissvorgangs umfasst und eine äussere Kontur aufweist, wobei der Schweissbolzen eine Kontaktfläche umfasst, welche dafür vorgesehen ist, vor und/oder während des Schweissvorgangs den Untergrund zu kontaktieren, und wobei ausgehend von der Kontaktfläche eine Tangente an die äussere Kontur anlegbar ist, welche mit der Schweissrichtung einen Winkel von weniger als 60° einschliesst, wenn der Schweissbolzen von der Haltevorrichtung gehalten ist und die Kontaktfläche den Untergrund kontaktiert.

2. Befestigungssystem nach Anspruch 1, wobei die Tangente mit der Schweissrichtung einen Winkel von weniger als 45°, insbesondere weniger als 30°, einschliesst, wenn der Schweissbolzen von der Haltevorrichtung gehalten ist und die Kontaktfläche den Untergrund kontaktiert.

3. Befestigungssystem nach einem der vorhergehenden Ansprüche, wobei die Schweisspistole eine die Haltevorrichtung beaufschlagende Haltefeder und ein Auflageelement mit einer Auflagefläche aufweist, und wobei die Haltevorrichtung mit dem Schweissbolzen gegen eine Federkraft der Haltefeder relativ zum Auflageelement entgegen der Schweissrichtung versetzbar ist, bis die Kontaktfläche des Schweissbolzens und die Auflagefläche in Schweissrichtung auf gleicher Höhe angeordnet sind.

4. Befestigungssystem nach einem der vorhergehenden Ansprüche, wobei die Schweisspistole ein Anpresselement mit einer Anpressfläche und eine das Anpresselement beaufschlagende Anpressfeder sowie ein Auflageelement mit ener Auflagefläche aufweist, und wobei das Anpresselement gegen eine Federkraft der Anpressfeder relativ zum Auflageelement entgegen der Schweissrichtung versetzbar ist, bis die Kontaktfläche des Schweissbolzens und die Anpressfläche in Schweissrichtung auf gleicher Höhe angeordnet sind.

5. Befestigungssystem nach den Ansprüchen 3 und 4, wobei die Anpressfläche, in Schweissrichtung betrachtet, zwischen der Kontaktfläche und der Auflagefläche angeordnet ist.

6. Befestigungssystem nach einem der vorhergehenden Ansprüche, wobei die Schweisspistole ein Auflageelement mit einer Auflagefläche aufweist, und wobei das Auflageelement bezüglich der Schweissrichtung in einer Umfangsrichtung im Wesentlichen geschlossen ist und einen gekrümmten, insbesondere mehrfach gekrümmten, Auslasskanal aufweist.

7. Schweisspistole, umfassend eine Haltevorrichtung zum Halten des Schweissbolzens während eines Schweissvorgangs und ein Auflageelement mit einer Auflagefläche, wobei das Auflageelement bezüglich der Schweissrichtung in einer Umfangsrichtung im Wesentlichen geschlossen ist und einen gekrümmten, insbesondere mehrfach gekrümmten, Auslasskanal aufweist.
